# EUROPEAN PATENT SPECIFICATION

(11) **EP 3 834 920 B1**
(45) Date of publication and mention of the grant of the patent: **04.01.2023**
(21) Application number: 20758086.1
(22) Date of filing: 20.04.2020
(51) Int. Cl.: B01D 65/10, B01D 46/54, G01N 13/02

(54) **DYNAMIC DETECTION SYSTEM AND METHOD FOR CONTACT ANGLE OF GAS PURIFICATION FILM**
DYNAMISCHES DETEKTIONSSYSTEM UND VERFAHREN FÜR DEN KONTAKTWINKEL EINES GASREINIGUNGSFILMS
SYSTÈME ET PROCÉDÉ DE DÉTECTION DYNAMIQUE D'ANGLE DE CONTACT D'UN FILM DE PURIFICATION DE GAZ

(30) Priority: 15.10.2019 CN 201910976203
(43) Date of publication of application: 16.06.2021
(73) Proprietor: Nanjing Tech University, Nanjing, Jiangsu 211816 (CN); Jiangsu Jiulang High-Tech Co., Ltd., Jiangsu 211800 (CN)
(72) Inventor: ZHONG, Zhaoxiang, Nanjing Jiangsu 211816 (CN); WU, Junwei, Jiangsu 211800 (CN); XING, Weihong, Nanjing Jiangsu 211816 (CN); ZHOU, Qun, Jiangsu 211800 (CN)
(74) Representative: Gong, Jinping
(86) International application number: PCT/CN2020/085537
(87) International publication number: WO 2021/073063

(56) References cited:
- WO-A1-2013/176264
- CN-A- 108 414 421
- CN-A- 108 414 421
- CN-A- 109 632 580
- CN-A- 110 108 599
- CN-A- 110 108 599
- CN-A- 110 681 268
- CN-U- 203 944 278
- US-A- 5 423 218
- TUMMONS EMILY N ET AL: "Behavior of oil droplets at the membrane surface during crossflow microfiltration of oil-water emulsions", JOURNAL OF MEMBRANE SCIENCE, vol. 500, 17 November 2015 (2015-11-17), pages 211-224, XP029355450, ISSN: 0376-7388, DOI: 10.1016/J.MEMSCI.2015.11.005

## Description

### Technical Field

The invention relates to a surface performance test field of a gas purification membrane, in particular to a dynamic detection system and method for the contact angle of the gas purification membrane.

### Background

The gas purification membrane is a new type of gas purification material, which has the advantages such as uniform pore size, large gas flux, low running resistance, long service life, etc. This gas purification membrane has been widely used in the fields including industrial exhaust gas purification, ultra-fine powder recovery, workshop ventilation and purification, indoor air purification, personal hygiene protection, etc. The gas purification membrane is easily contaminated by water or oily aerosols during use, and water droplets or oil droplets easily block the filter pore passage, thus resulting in increased running resistance and reducing the purification efficiency. The hydrophobic and oleophobic modification of the surface of the gas purification membrane can effectively enhance the membrane material's resistance to water and oil contamination. The oil contact angle and water contact angle after modification are important parameters that characterize the hydrophobic and oleophobic properties of the membrane material. At present, the contact angle of the gas purification membrane is tested using a common solid surface contact angle test device and method, such as disclosed in CN108414421A. The method is a static detection method, but using the method, it is impossible to obtain the contact angle data and the impact of filtration parameters such as filtration rate etc. on the contact angle in the gas filtration state.

### Summary

The invention discloses a dynamic detection system and method for the contact angle of a gas purification membrane, which can measure the contact angle of the membrane surface in the state of gas filtration and complete the dynamic detection of the contact angle of the gas purification membrane. The contact angle dynamic detection system of the invention has advantages such as simple structure and easy operation, and can be used to obtain the contact angle data of the gas purification membrane at different filtration rates.

The technical scheme of the invention:
A dynamic detection system for the contact angle of a gas purification membrane includes a light source, a gas purification membrane stage, an imaging system, a computer, and a supporting platform; the light source, the gas purification membrane stage, and the imaging system are linearly fixed on the supporting platform, and the imaging system is connected to the computer;

The gas purification membrane stage includes a loose flange, an upper fixed flange, a separation net, a cylinder, a gas outlet, a desiccant, a lower fixed flange, a blind plate, a gas flow controller, a buffer tank, an induced draft fan, and a differential pressure sensor; the upper fixed flange and the lower fixed flange are fixed to the upper and lower ends of the cylinder; the loose flange and the upper fixed flange have a matching flange hole; the upper fixed flange is welded to a supporting screen; the separation net is located in the middle of the cylinder, the gas outlet is located in the lower part of the cylinder, and the desiccant is filled in the cylinder and located in the lower part of the separation net; the blind plate and the lower fixed flange have a matching flange hole; the gas outlet is connected to the gas inlet of the gas flow controller through a gas pipeline; the gas outlet of the gas flow controller is connected to the buffer tank through a gas pipeline; the induced draft fan is connected to the buffer tank through a gas pipeline; the gas flow controller is connected to the computer through a signal line; the differential pressure sensor is connected to the cylinder through a connecting pipe, and a differential pressure signal is transmitted to the computer through a signal line.

Further, the diameter of the cylinder is 2-10cm, and the diameter of the loose flange is 4-12cm.

Further, the supporting screen is a stainless steel screen with a mesh diameter of 5-100µm.

Further, the desiccant is silica gel or molecular sieve particles with a particle size of 1-5 mm.

The dynamic detection method for the contact angle of the gas purification membrane using the system according to claim 1 includes the following steps:
Step 1: Cut a gas purification membrane material, place the material onto the upper fixed flange, and use the loose flange for fixing and sealing;
Step 2: Turn on the light source and the imaging system, drip a droplet with a certain volume onto the surface of the gas purification membrane using a droplet needle, and photograph the initial state of the droplet using the imaging system;
Step 3: Turn on the induced draft fan, and adjust the gas permeation speed of the gas purification membrane by adjusting the gas flow controller; the imaging system photographs the state of the droplet on the surface of the gas purification membrane at different permeation speeds, and the differential pressure sensor detects the differential pressure between the two sides of the gas purification membrane;
Step 4: The computer calculates the contact angle, and records the contact angle, the gas permeation speed, and the differential pressure between the two sides of the gas purification membrane at different filtration rates; a dynamic data curve of the contact angle is drawn using the gas permeation speed as the abscissa and the contact angle and the differential pressure between the two sides of the gas purification membrane as the ordinate.
Further, the loose flange, the gas purification membrane and the fixed flange are sealed by a gasket in step 1;
Further, the volume of the droplet is 3-20µL, and the type of the droplet is deionized water or n-hexadecane in step 2;
Further, the gas permeation speed of the gas purification membrane is 0.1-5 m/min in step 3;
Further, the calculation method for the contact angle is a cone method in step 4.

The gas purification membrane stage used in the invention fixes the gas purification membrane material to be detected onto the upper fixed flange on the stage through the flange, and the supporting screen can support the gas purification membrane. The cylinder of the gas purification membrane stage is provided with a gas outlet, and the induced draft fan provides negative pressure through the gas outlet of the gas membrane purification stage. Gas permeates the gas purification membrane under the action of the differential pressure; the droplet dripped on the gas purification membrane is subjected to the action of the negative pressure and thus the contact angle changes, which is detected and calculated by the imaging system to obtain the dynamic detection data of the contact angle. A separation net is installed inside the gas contact angle stage; the desiccant filled in the lower part of the separation net can absorb the water vapor permeating the gas purification membrane, so as to prevent an error in the measurement of the gas quantity and improve the measurement accuracy. The separation net desiccant is isolated in the lower part of the cylinder to prevent the desiccant from contacting the gas purification membrane and thus causing a measurement error.

### Brief Description of the Drawings

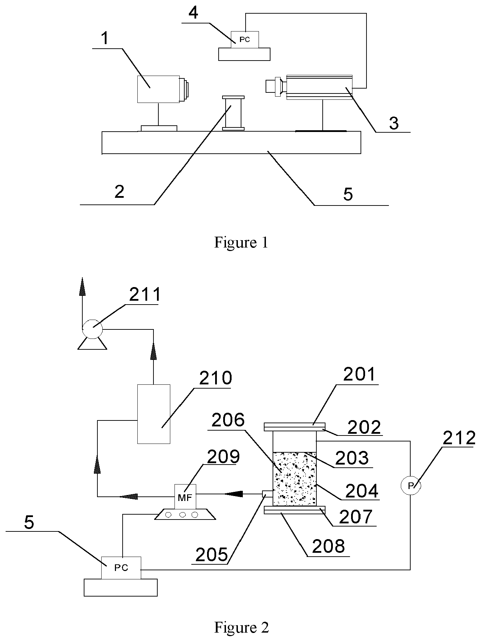

Figure 1 is the schematic of the dynamic detection system for the contact angle of the gas purification membrane according to the invention;
Figure 2 is the structure drawing of the gas purification membrane stage according to the invention;
Figure 3 is the schematic of the upper fixed flange according to the invention.
   Where, 1-light source, 2-gas purification membrane stage, 3-imaging system, 4-computer, 5-supporting platform, 201-loose flange, 202-upper fixed flange, 203-separation net, 204-cylinder, 205-gas outlet, 206-desiccant, 207-lower fixed flange, 208-blind plate, 209-gas flow controller, 210-buffer tank, 211-induced draft fan, 212-differential pressure sensor, 2021-flange hole, 2022-supporting screen.

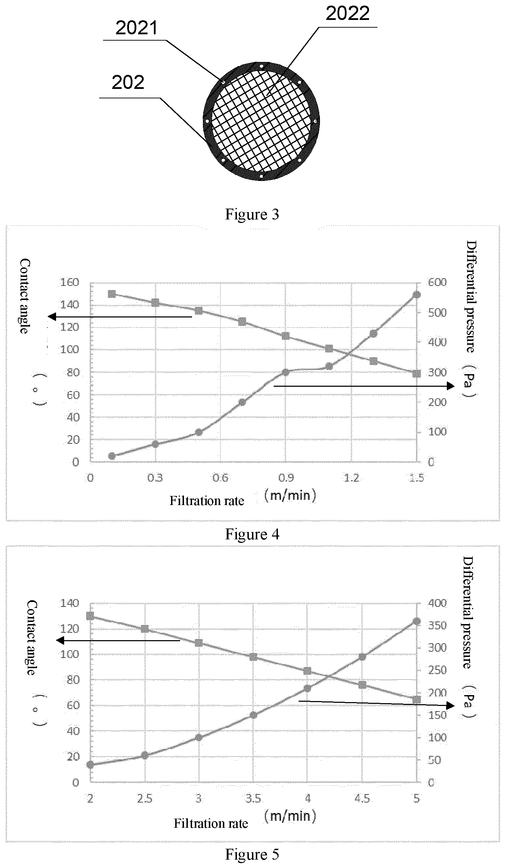

Figure 4 is the curve chart of the variation of the water contact angle and differential pressure of the gas purification membrane with the filtration rate in embodiment 1.
Figure 5 is the curve chart of the variation of the n-Hexadecane contact angle and differential pressure of the gas purification membrane with the filtration rate in embodiment 2.

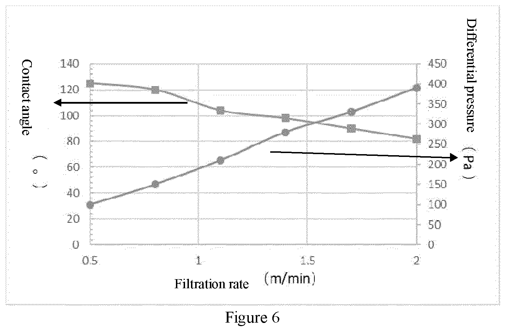

Figure 6 is the curve chart of the variation of the water contact angle and differential pressure of the gas purification membrane with the filtration rate in embodiment 3.

### Detailed Description

According to the embodiments and drawings, the invention is further described below. The following embodiments describe the invention by way of example only. These embodiments are not intended to impose any limitation on the invention. Obviously, general technicians in this field can make various transformations and modifications to the invention within the scope and essence of the invention.

### Embodiment 1

A dynamic detection system for the contact angle of a gas purification membrane includes a light source 1, a gas purification membrane stage 2, an imaging system 3, a computer 4, and a supporting platform 5; the light source 1, the gas purification membrane stage 2, and the imaging system 3 are linearly fixed on the supporting platform 5, and the imaging system 3 is connected to the computer 4;
the gas purification membrane stage 2 includes a loose flange 201, an upper fixed flange 202, a separation net 203, a cylinder 204, a gas outlet 205, a desiccant 206, a lower fixed flange 207, a blind plate 208, a gas flow controller 209, a buffer tank 210, an induced draft fan 211, and a differential pressure sensor 212; the upper fixed flange 202 and the lower fixed flange 207 are fixed to the upper and lower ends of the cylinder 204; the loose flange 201 and the upper fixed flange 202 have a matching flange hole 2021; the upper fixed flange 202 is welded to a supporting screen 2022; the separation net 203 is located in the middle of the cylinder 204, the gas outlet 205 is located in the lower part of the cylinder 204, and the desiccant 206 is filled in the cylinder 204 and located in the lower part of the separation net 203; the blind plate 208 and the lower fixed flange 207 have a matching flange hole; the gas outlet 205 is connected to the gas inlet of the gas flow controller 209 through a gas pipeline; the gas outlet of the gas flow controller 209 is connected to the buffer tank 210 through a gas pipeline; the induced draft fan 211 is connected to the buffer tank 210 through a gas pipeline; the gas flow controller 209 is connected to the computer 4 through a signal line; the differential pressure sensor 212 is connected to the cylinder 204 through a connecting pipe, and a differential pressure signal is transmitted to the computer 4 through a signal line.

The diameter of the cylinder 204 is 2cm, and the diameter of the loose flange 201 is 4cm.

The supporting screen 2022 is a stainless steel screen with a mesh diameter of 5µm.

The desiccant 206 is silica gel or molecular sieve particles with a particle size of 1mm

A dynamic detection method for the contact angle of the gas purification membrane using the system includes the following steps:
Step 1: Cut a gas purification membrane material, place the material onto the upper fixed flange 201, and use the loose flange 202 for fixing and sealing;
Step 2: Turn on the light source 1 and the imaging system 3, drip a droplet with a certain volume onto the surface of the gas purification membrane using a droplet needle, and photograph the initial state of the droplet using the imaging system 3;
Step 3: Turn on the induced draft fan 211, and adjust the gas permeation speed of the gas purification membrane by adjusting the gas flow controller 209; the imaging system 3 photographs the state of the droplet on the surface of the gas purification membrane at different permeation speeds, and the differential pressure sensor 212 detects the differential pressure between the two sides of the gas purification membrane;
Step 4: The computer 4 calculates the contact angle, and records the contact angle, the gas permeation speed, and the differential pressure between the two sides of the gas purification membrane at different filtration rates; a dynamic data curve of the contact angle is drawn using the gas permeation speed as the abscissa and the contact angle and the differential pressure between the two sides of the gas purification membrane as the ordinate.

The loose flange 201, the gas purification membrane and the fixed flange 202 are sealed by a gasket in step 1.

The volume of the droplet is 3µL, and the type of the droplet is deionized water in step 2.

The gas permeation speed of the gas purification membrane is increased gradually from 0.1m/min to 1.5m/min in step 3.

The calculation method for the contact angle is a cone method in step 4.

The curve chart of the variation of the water contact angle and differential pressure of the gas purification membrane with the filtration rate is shown in Figure 4.

### Embodiment 2

The dynamic detection system for the contact angle of the gas purification membrane includes the light source 1, the gas purification membrane stage 2, the imaging system 3, the computer 4, and the supporting platform 5; the light source 1, the gas purification membrane stage 2, and the imaging system 3 are linearly fixed on the supporting platform 5, and the imaging system 3 is connected to the computer 4;
the gas purification membrane stage 2 includes the loose flange 201, the upper fixed flange 202, the separation net 203, the cylinder 204, the gas outlet 205, the desiccant 206, the lower fixed flange 207, the blind plate 208, the gas flow controller 209, the buffer tank 210, an induced draft fan 211, and the differential pressure sensor 212; the upper fixed flange 202 and the lower fixed flange 207 are fixed to the upper and lower ends of the cylinder 204; the loose flange 201 and the upper fixed flange 202 have a matching flange hole 2021; the upper fixed flange 202 is welded to the supporting screen 2022; the separation net 203 is located in the middle of the cylinder 204, the gas outlet 205 is located in the lower part of the cylinder 204, and the desiccant 206 is filled in the cylinder 204 and located in the lower part of the separation net 203; the blind plate 208 and the lower fixed flange 207 have a matching flange hole; the gas outlet 205 is connected to the gas inlet of the gas flow controller 209 through a gas pipeline; the gas outlet of the gas flow controller 209 is connected to the buffer tank 210 through a gas pipeline; the induced draft fan 211 is connected to the buffer tank 210 through a gas pipeline; the gas flow controller 209 is connected to the computer 4 through a signal line; the differential pressure sensor 212 is connected to the cylinder 204 through a connecting pipe, and a differential pressure signal is transmitted to the computer 4 through a signal line.

The diameter of the cylinder 204 is 10cm, and the diameter of the loose flange 201 is 12cm.

The supporting screen 2022 is a stainless steel screen with a mesh diameter of 100µm.

The desiccant 206 is silica gel or molecular sieve particles with a particle size of 5mm

The dynamic detection method for the contact angle of the gas purification membrane using the system includes the following steps:
Step 1: Cut the gas purification membrane material, place the material onto the upper fixed flange 201, and use the loose flange 202 for fixing and sealing;
Step 2: Turn on the light source 1 and the imaging system 3, drip a droplet with a certain volume onto the surface of the gas purification membrane using a droplet needle, and photograph the initial state of the droplet using the imaging system 3;
Step 3: Turn on the induced draft fan 211, and adjust the gas permeation speed of the gas purification membrane by adjusting the gas flow controller 209; the imaging system 3 photographs the state of the droplet on the surface of the gas purification membrane at different permeation speeds, and the differential pressure sensor 212 detects the differential pressure between the two sides of the gas purification membrane;
Step 4: The computer 4 calculates the contact angle, and records the contact angle, the gas permeation speed, and the differential pressure between the two sides of the gas purification membrane at different filtration rates; a dynamic data curve of the contact angle is drawn using the gas permeation speed as the abscissa and the contact angle and the differential pressure between the two sides of the gas purification membrane as the ordinate.

The loose flange 201, the gas purification membrane and the fixed flange 202 are sealed by a gasket in step 1.

The volume of the droplet is 20µL, and the type of the droplet is n-Hexadecane in step 2.

The gas permeation speed of the gas purification membrane is increased gradually from 2m/min to 5m/min in step 3.

The calculation method for the contact angle is a cone method in step 4.

The curve chart of the variation of the n-Hexadecane contact angle and differential pressure of the gas purification membrane with the filtration rate is shown in Figure 5.

### Embodiment 3

The dynamic detection system for the contact angle of the gas purification membrane includes the light source 1, the gas purification membrane stage 2, the imaging system 3, the computer 4, and the supporting platform 5; the light source 1, the gas purification membrane stage 2, and the imaging system 3 are linearly fixed on the supporting platform 5, and the imaging system 3 is connected to the computer 4;
the gas purification membrane stage 2 includes a loose flange 201, an upper fixed flange 202, a separation net 203, a cylinder 204, a gas outlet 205, a desiccant 206, a lower fixed flange 207, a blind plate 208, a gas flow controller 209, a buffer tank 210, an induced draft fan 211, and a differential pressure sensor 212; the upper fixed flange 202 and the lower fixed flange 207 are fixed to the upper and lower ends of the cylinder 204; the loose flange 201 and the upper fixed flange 202 have a matching flange hole 2021; the upper fixed flange 202 is welded to the supporting screen 2022; the separation net 203 is located in the middle of the cylinder 204, the gas outlet 205 is located in the lower part of the cylinder 204, and the desiccant 206 is filled in the cylinder 204 and located in the lower part of the separation net 203; the blind plate 208 and the lower fixed flange 207 have a matching flange hole; the gas outlet 205 is connected to the gas inlet of the gas flow controller 209 through a gas pipeline; the gas outlet of the gas flow controller 209 is connected to the buffer tank 210 through a gas pipeline; the induced draft fan 211 is connected to the buffer tank 210 through a gas pipeline; the gas flow controller 209 is connected to the computer 4 through a signal line; the differential pressure sensor 212 is connected to the cylinder 204 through a connecting pipe , and a differential pressure signal is transmitted to the computer 4 through a signal line.

The diameter of the cylinder 204 is 10cm, and the diameter of the loose flange 201 is 10cm.

The supporting screen 2022 is a stainless steel screen with a mesh diameter of 10µm.

The desiccant 206 is silica gel or molecular sieve particles with a particle size of 3mm.

The dynamic detection method for the contact angle of the gas purification membrane using the system includes the following steps:
Step 1: Cut the gas purification membrane material, place the material onto the upper fixed flange 201, and use the loose flange 202 for fixing and sealing;
Step 2: Turn on the light source 1 and the imaging system 3, drip a droplet with a certain volume onto the surface of the gas purification membrane using a droplet needle, and photograph the initial state of the droplet using the imaging system 3;
Step 3: Turn on the induced draft fan 211, and adjust the gas permeation speed of the gas purification membrane by adjusting the gas flow controller 209; the imaging system 3 photographs the state of the droplet on the surface of the gas purification membrane at different permeation speeds, and the differential pressure sensor 212 detects the differential pressure between the two sides of the gas purification membrane;
Step 4: The computer 4 calculates the contact angle, and records the contact angle, the gas permeation speed, and the differential pressure between the two sides of the gas purification membrane at different filtration rates; a dynamic data curve of the contact angle is drawn using the gas permeation speed as the abscissa and the contact angle and the differential pressure between the two sides of the gas purification membrane as the ordinate.

The loose flange 201, the gas purification membrane and the fixed flange 202 are sealed by a gasket in step 1.

The volume of the droplet is 5µL, and the type of the droplet is deionized water in step 2.

The gas permeation speed of the gas purification membrane is increased gradually from 0.5m/min to 2m/min in step 3.

The calculation method for the contact angle is a cone method in step 4.

The curve chart of the variation of the water contact angle and differential pressure of the gas purification membrane with the filtration rate is shown in Figure 6.

## Claims

1. A dynamic detection system for the contact angle of a gas purification membrane, wherein the system comprises a light source (1), a gas purification membrane stage (2), an imaging system (3), a computer (4), and a supporting platform (5); the light source (1), the gas purification membrane stage (2), and the imaging system (3) are linearly fixed on the supporting platform (5), and the imaging system (3) is connected to the computer (4);
the gas purification membrane stage (2) comprises a loose flange (201), an upper fixed flange (202), a separation net (203), a cylinder (204), a gas outlet (205), a desiccant (206), a lower fixed flange (207), a blind plate (208), a gas flow controller (209), a buffer tank (210), an induced draft fan (211), and a differential pressure sensor (212); the upper fixed flange (202) and the lower fixed flange (207) are fixed to the upper and lower ends of the cylinder (204); the loose flange (201) and the upper fixed flange (202) have a matching flange hole (2021); the upper fixed flange (202) is welded to a supporting screen (2022); the separation net (203) is located in the middle of the cylinder (204), the gas outlet (205) is located in the lower part of the cylinder (204), and the desiccant (206) is filled in the cylinder (204) and located in the lower part of the separation net (203); the blind plate (208) and the lower fixed flange (207) have a matching flange hole; the gas outlet (205) is connected to the gas inlet of the gas flow controller (209) through a gas pipeline; the gas outlet of the gas flow controller (209) is connected to the buffer tank (210) through a gas pipeline; the induced draft fan (211) is connected to the buffer tank (210) through a gas pipeline; the gas flow controller (209) is connected to the computer (4) through a signal line; the differential pressure sensor (212) is connected to the cylinder (204) through a connecting pipe, and a differential pressure signal is transmitted to the computer (4) through a signal line;

2. The dynamic detection system for the contact angle of the gas purification membrane according to claim 1, wherein the diameter of the cylinder (204) is 2-10 cm, and the diameter of the loose flange (201) is 4-12 cm;

3. The dynamic detection system for the contact angle of the gas purification membrane according to claim 1, wherein the supporting screen (2022) is a stainless steel screen with a mesh diameter of 5-100µm;

4. The dynamic detection system for the contact angle of the gas purification membrane according to claim 1, wherein the desiccant (206) is silica gel or molecular sieve particles with a particle size of 1-5 mm;

5. A dynamic detection method for the contact angle of the gas purification membrane using the dynamic detection system for the contact angle of the gas purification membrane according to any one of claims 1-4, wherein the method comprises the following steps:
Step 1: Cut a gas purification membrane material, place the material onto the upper fixed flange (202), and use the loose flange (201) for fixing and sealing;
Step 2: Turn on the light source (1) and the imaging system (3), drip a droplet with a certain volume onto the surface of the gas purification membrane, and photograph the initial state of the droplet using the imaging system (3);
Step 3: Turn on the induced draft fan (211), and adjust the gas permeation speed of the gas purification membrane by adjusting the gas flow controller (209); the imaging system (3) photographs the state of the droplet on the surface of the gas purification membrane at different permeation speeds, and the differential pressure sensor (212) detects the differential pressure between the two sides of the gas purification membrane;
Step 4: The computer (4) calculates the contact angle, and records the contact angle, the gas permeation speed, and the differential pressure between the two sides of the gas purification membrane at different filtration rates; a dynamic data curve of the contact angle is drawn using the gas permeation speed as the abscissa and the contact angle and the differential pressure between the two sides of the gas purification membrane as the ordinate;

6. The dynamic detection method for the contact angle of the gas purification membrane according to claim 5, wherein the loose flange (201), the gas purification membrane and the fixed flange (202) are sealed by a gasket in step 1;

7. The dynamic detection method for the contact angle of the gas purification membrane according to claim 5, wherein the volume of the droplet is 3-20µL, and the type of the droplet is deionized water or n-hexadecane in step 2;

8. The dynamic detection method for the contact angle of the gas purification membrane according to claim 5, wherein the gas permeation speed of the gas purification membrane is 0.1-5 m/min in step 3;

9. The dynamic detection method for the contact angle of the gas purification membrane according to claim 5, wherein the calculation method for the contact angle is a cone method in step 4.

## Patentansprüche

1. Dynamisches Detektionssystem für den Kontaktwinkel einer Gasreinigungsmembran, wobei das System eine Lichtquelle (1), eine Gasreinigungsmembran-Stufe (2), ein Bildgebungssystem (3), einen Computer (4) und eine Stützplattform (5) umfasst; wobei die Lichtquelle (1), die Gasreinigungsmembran-Stufe (2) und das Bildgebungssystem (3) linear auf der Stützplattform (5) befestigt sind, und das Bildgebungssystem (3) an den Computer (4) angeschlossen ist;
wobei die Gasreinigungsmembran-Stufe (2) einen losen Flansch (201), einen oberen festen Flansch (202), ein Trennnetz (203), einen Zylinder (204), einen Gasauslass (205), ein Trockenmittel (206), einen unteren festen Flansch (207), eine Blindplatte (208), einen Gasstromregler (209), einen Puffertank (210), ein Saugzuggebläse (211) und einen Differenzdrucksensor (212) umfasst; wobei der obere feste Flansch (202) und der untere feste Flansch (207) am oberen und unteren Ende des Zylinders (204) befestigt sind; wobei der lose Flansch (201) und der obere feste Flansch (202) ein passendes Flanschloch (2021) haben; wobei der obere feste Flansch (202) mit einem Stützsieb (2022) verschweißt ist; wobei das Trennnetz (203) sich in der Mitte des Zylinders (204) befindet, der Gasauslass (205) sich im unteren Teil des Zylinders (204) befindet, und das Trockenmittel (206) in der Zylinder (204) gefüllt ist und sich im unteren Teil des Trennnetzes (203) befindet; wobei die Blindplatte (208) und der untere feste Flansch (207) ein passendes Flanschloch haben; wobei der Gasauslass (205) über eine Gasleitung mit dem Gaseinlass des Gasstromreglers (209) verbunden ist; wobei der Gasauslass des Gasstromreglers (209) über eine Gasleitung mit dem Puffertank (210) verbunden ist; wobei das Saugzuggebläse (211) über eine Gasleitung mit dem Puffertank (210) verbunden ist; wobei der Gasstromregler (209) über eine Signalleitung mit dem Computer (4) verbunden ist; wobei der Differenzdrucksensor (212) über ein Verbindungsrohr mit dem Zylinder (204) verbunden ist, und wobei ein Differenzdrucksignal über eine Signalleitung an den Computer übertragen (4) ist.

2. Dynamische Detektionssystem für den Kontaktwinkel der Gasreinigungsmembran nach Anspruch 1, wobei der Durchmesser des Zylinders (204) 2-10 cm, und der Durchmesser des losen Flansches (201) 4-12 cm ist.

3. Dynamische Detektionssystem für den Kontaktwinkel der Gasreinigungsmembran nach Anspruch 1, wobei das Stützsieb (2022) ein Edelstahlsieb mit einem Maschendurchmesser von 5-100µm ist.

4. Dynamische Detektionssystem für den Kontaktwinkel der Gasreinigungsmembran nach Anspruch 1, wobei das Trockenmittel (206) Kieselgel oder Molekularsiebpartikel mit einer Partikelgröße von 1-5 mm ist.

5. Dynamisches Detektionsverfahren für den Kontaktwinkel der Gasreinigungsmembran unter Verwendung des dynamischen Detektionssystems für den Kontaktwinkel der Gasreinigungsmembran nach einem der Ansprüche 1-4, wobei das Verfahren die folgenden Schritte umfasst:
Schritt 1: Schneiden eines Gasreinigungsmembranenmaterials, Legen des Materials auf den oberen festen Flansch (202), und Verwenden des losen Flansches (201) zur Befestigung und Abdichtung;
Schritt 2: Einschalten der Lichtquelle (1) und des Bildgebungssystems (3), Tropfen eines Tröpfchens mit einem bestimmten Volumen auf die Oberfläche der Gasreinigungsmembran, und Fotografieren des Anfangszustands des Tröpfchens mit dem Bildgebungssystem (3);
Schritt 3: Einschalten des Saugzuggebläses (211), und Verstellen der Gaspermeationsgeschwindigkeit der Gasreinigungsmembran, indem der Gasstromregler (209) verstellt wird; wobei das Bildgebungssystem (3) den Zustand des Tröpfchens auf der Oberfläche der Gasreinigungsmembran bei verschiedenen Permeationsgeschwindigkeiten fotografiert, und der Differenzdrucksensor (212) den Differenzdruck zwischen den beiden Seiten der Gasreinigungsmembran erfasst;
Schritt 4: Der Computer (4) berechnet den Kontaktwinkel und zeichnet den Kontaktwinkel, die Gaspermeationsgeschwindigkeit und den Differenzdruck zwischen den beiden Seiten der Gasreinigungsmembran bei verschiedenen Filtrationsraten auf; wobei eine dynamische Datenkurve des Kontaktwinkels unter Verwendung der Gaspermeationsgeschwindigkeit als Abszisse und des Kontaktwinkels und des Differenzdrucks zwischen den beiden Seiten der Gasreinigungsmembran als Ordinate gezeichnet wird.

6. Dynamische Detektionsverfahren für den Kontaktwinkel der Gasreinigungsmembran nach Anspruch 5, wobei in Schritt 1, der lose Flansch (201), die Gasreinigungsmembran und der feste Flansch (202) durch eine Dichtung abgedichtet werden.

7. Dynamische Detektionsverfahren für den Kontaktwinkel der Gasreinigungsmembran nach Anspruch 5, wobei in Schritt 2, das Volumen des Tröpfchens 3-20µL ist, und der Typ des Tröpfchens deionisiertes Wasser oder n-Hexadecan ist.

8. Dynamische Detektionsverfahren für den Kontaktwinkel der Gasreinigungsmembran nach Anspruch 5, wobei in Schritt 3, die Gaspermeationsgeschwindigkeit der Gasreinigungsmembran 0,1-5 m/min beträgt.

9. Dynamische Detektionsverfahren für den Kontaktwinkel der Gasreinigungsmembran nach Anspruch 5, wobei in Schritt 4, das Berechnungsverfahren für den Kontaktwinkel ein Kegelverfahren ist.

## Revendications

1. Un système de détection dynamique pour l'angle de contact d'une membrane de purification de gaz, dans lequel le système comprend une source de lumière (1), un étage de membrane de purification de gaz (2), un système d'imagerie (3), un ordinateur (4) et une plate-forme de support (5); la source de lumière (1), l'étage de membrane de purification de gaz (2) et le système d'imagerie (3) sont fixés linéairement sur la plate-forme de support (5), et le système d'imagerie (3) est connecté à l'ordinateur (4);
l'étage de membrane de purification de gaz (2) comprend une bride libre (201), une bride fixe supérieure (202), un filet de séparation (203), un cylindre (204), une sortie de gaz (205), un dessiccateur (206), une bride fixe inférieure (207), une plaque aveugle (208), un contrôleur d'écoulement de gaz (209), un réservoir tampon (210), un ventilateur à tirage induit (211) et un capteur de pression différentielle (212); la bride fixe supérieure (202) et la bride fixe inférieure (207) sont fixées aux extrémités supérieure et inférieure du cylindre (204); la bride libre (201) et la bride fixe supérieure (202) ont un trou de bride correspondant (2021); la bride fixe supérieure (202) est soudée à un écran de support (2022); le filet de séparation (203) est situé au milieu du cylindre (204), la sortie de gaz (205) est située dans la partie inférieure du cylindre (204), et le dessiccateur (206) est rempli dans le cylindre (204) se trouve dans la partie inférieure du filet de séparation (203); la plaque aveugle (208) et la bride fixe inférieure (207) ont un trou de bride correspondant; la sortie de gaz (205) est reliée à l'entrée de gaz du contrôleur d'écoulement de gaz (209) par une conduite de gaz; la sortie de gaz du contrôleur d'écoulement de gaz (209) est reliée au réservoir tampon (210) par une conduite de gaz; le ventilateur à tirage induit (211) est relié au réservoir tampon (210) par une conduite de gaz; le contrôleur d'écoulement de gaz (209) est relié à l'ordinateur (4) par une ligne de signal; le capteur de pression différentielle (212) est relié au cylindre (204) par un tuyau de liaison, et un signal de pression différentielle est transmis à l'ordinateur (4) par une ligne de signal.

2. Le système de détection dynamique pour l'angle de contact d'une membrane de purification de gaz selon la revendication 1, dans lequel le diamètre du cylindre (204) est de 2 à 10 cm, et le diamètre de la bride libre (201) est de 4 à 12 cm.

3. Le système de détection dynamique pour l'angle de contact d'une membrane de purification de gaz selon la revendication 1, dans lequel l'écran de support (2022) est un écran en acier inoxydable avec un diamètre de maille de 5 à 100µm.

4. Le système de détection dynamique pour l'angle de contact d'une membrane de purification de gaz selon la revendication 1, dans lequel le dessiccateur (206) est du gel de silice ou des particules de tamis moléculaire ayant une taille de particule de 1 à 5 mm.

5. Un procédé de détection dynamique pour l'angle de contact d'une membrane de purification de gaz utilisant le système de détection dynamique pour l'angle de contact d'une membrane de purification de gaz selon l'une quelconque des revendications 1 à 4, dans lequel le procédé comprend les étapes suivantes:
Étape 1: Découpez un matériau de membrane de purification des gaz, placez le matériau sur la bride fixe supérieure (202) et utilisez la bride libre (201) pour la fixation et l'étanchage;
Étape 2: Allumez la source lumineuse (1) et le système d'imagerie (3), déposer une certaine quantité de gouttelettes sur la surface du film de purification de gaz, utiliser le système d'imagerie (3) pour photographier l'état initial des gouttelettes;
Étape 3: Mettez en marche le ventilateur à tirage induit (211), et réglez la vitesse de perméation des gaz de la membrane de purification de gaz en ajustant le contrôleur d'écoulement de gaz (209); le système d'imagerie (3) photographie l'état de la gouttelette sur la surface de la membrane de purification de gaz à différentes vitesses de perméation, et le capteur de pression différentielle (212) détecte la pression différentielle entre les deux côtés de la membrane de purification de gaz;
Étape 4: L'ordinateur (4) calcule l'angle de contact, et enregistre l'angle de contact, la vitesse de perméation du gaz, et la pression différentielle entre les deux côtés de la membrane de purification du gaz à différentes vitesses de filtration; une courbe de données dynamiques de l'angle de contact est tracée en utilisant la vitesse de perméation du gaz comme abscisse et l'angle de contact et la pression différentielle entre les deux côtés de la membrane de purification du gaz comme ordonnée.

6. Le procédé de détection dynamique pour l'angle de contact d'une membrane de purification de gaz selon la revendication 5, dans lequel la bride libre (201), la membrane de purification de gaz et la bride fixe (202) sont scellées par un joint à l'étape 1.

7. Le procédé de détection dynamique pour l'angle de contact d'une membrane de purification de gaz selon la revendication 5, dans lequel le volume de la gouttelette est de 3 à 20µL, et le type de la gouttelette est de l'eau déionisée ou du n-hexadécane à l'étape 2.

8. Le procédé de détection dynamique pour l'angle de contact d'une membrane de purification de gaz selon la revendication 5, dans lequel la vitesse de perméation de gaz de la membrane de purification de gaz est de 0,1 à 5 m/min à l'étape 3.

9. Le procédé de détection dynamique pour l'angle de contact d'une membrane de purification de gaz selon la revendication 5, dans lequel la méthode de calcul de l'angle de contact est une méthode de cône à l'étape 4.
